Europäisches Patentamt

(19) European Patent Office

Office européen des brevets

(11) Numéro de publication : **0 312 552 B1**

(12) **FASCICULE DE BREVET EUROPEEN**

(45) Date de publication du fascicule du brevet :
**29.05.91 Bulletin 91/22**

(51) Int. Cl.⁵ : **G01C 19/64**

(21) Numéro de dépôt : **88901867.7**

(22) Date de dépôt : **18.02.88**

(86) Numéro de dépôt international :
**PCT/FR88/00091**

(87) Numéro de publication internationale :
**WO 88/06276 25.08.88 Gazette 88/19**

(54) **GYROMETRE LASER, DISPOSITIF DE SUPPRESSION DES ROTATIONS PARASITES DES MIROIRS MOBILES.**

(30) Priorité : **18.02.87 FR 8702091**

(43) Date de publication de la demande :
**26.04.89 Bulletin 89/17**

(45) Mention de la délivrance du brevet :
**29.05.91 Bulletin 91/22**

(84) Etats contractants désignés :
**DE GB**

(56) Documents cités :
**WO-A-86/01887**

(73) Titulaire : **DE SALABERRY, Bernard Lucien Charles**
**4 bis, rue de la Ceinture**
**F-78000 Versailles (FR)**

(72) Inventeur : **DE SALABERRY, Bernard Lucien Charles**
**4 bis, rue de la Ceinture**
**F-78000 Versailles (FR)**

(74) Mandataire : **Marquer, Francis et al**
**35, Avenue Victor Hugo Résidence Chamfleury**
**F-78180 Voisins-le-Bretonneux (FR)**

EP 0 312 552 B1

## Description

La présente invention concerne un dispositif destiné à supprimer les rotations parasites du ou des miroirs mobiles des gyromètres à laser, sous l'effet des accélérations, de l'activation mécanique ou de certaines vibrations.

Cette invention s'applique à tous les gyromètres laser triangulaires ou carrés, monoaxes ou multiaxes. Elle peut également s'appliquer à tout laser muni d'un asservissement de longueur de cavité par miroir mobile.

Le principe de fonctionnement des gyromètres à laser est maintenant bien connu et l'homme de l'art n'aura aucune peine à suivre les explications qui vont suivre.

Les gyromètres à laser, appelés dans ce qui va suivre gyrolasers, sont généralement constitués (V. WO-A-8 601 887) :

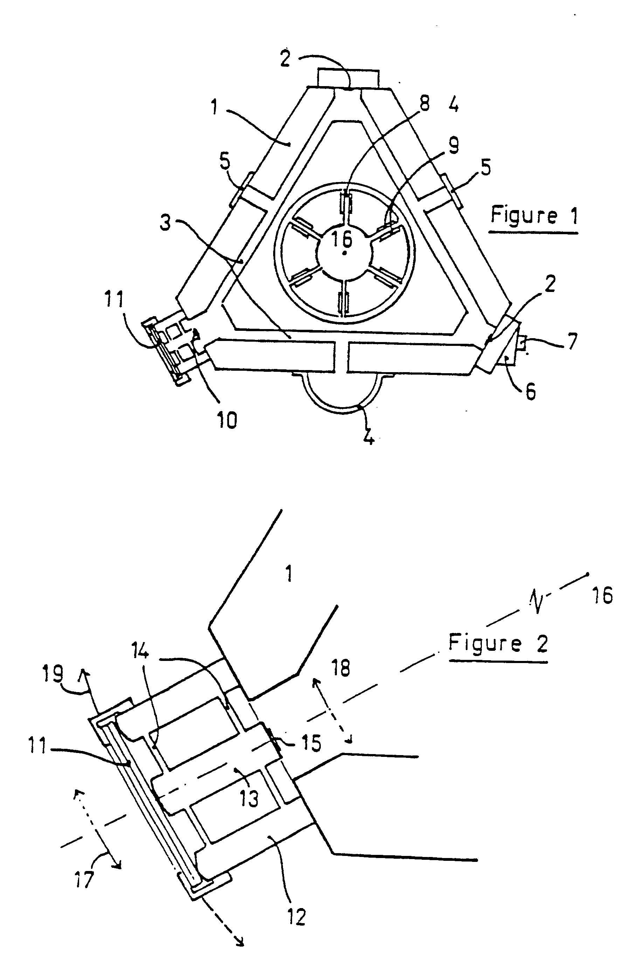

– d'un parcours optique triangulaire ou carré, creusé dans un bloc de matériau isolant et à faible coefficient de dilatation (figure 1). Ledit parcours optique étant délimité par trois ou quatre miroirs et fixés sur le bloc.

– d'un milieu amplificateur, permettant de générer dans la cavité optique deux ondes lumineuses tournant l'une dans un sens et l'autre dans l'autre. Les interférences entre ces deux ondes vont permettre la mesure de la rotation du gyromètre autour d'un axe perpendiculaire au plan de la cavité optique.

– d'un dispositif de mélange des ondes lumineuses pour créer des franges d'interférence sur un ensemble de cellules photoélectriques. Le défilement desdites franges représentant la rotation angulaire du gyrolaser, sera transformé par lesdites cellules photoélectriques en signaux électriques utilisables.

– d'un dispositif de mesure de l'intensité lumineuse des ondes laser.

Pour éviter les effets du phénomène bien connu de blocage entre les deux ondes lumineuses circulant dans le parcours optique (zone aveugle), le bloc du gyrolaser est généralement animé d'un mouvement angulaire alternatif de faible amplitude, autour d'un axe généralement perpendiculaire au plan de la cavité optique et qui peut être l'axe de symétrie du bloc optique. La fréquence du mouvement alternatif est choisie de telle façon que la vitesse angulaire du bloc optique soit la plus grande partie du temps en dehors de la zone aveugle.

Ce mouvement est créé par un dispositif oscillant constitué d'un ensemble élastique généralement placé à l'intérieur et au centre du bloc optique. L'inertie du bloc détermine, avec la raideur de l'ensemble élastique une fréquence d'oscillation qui sera entretenue par un système de moteur piézoélectrique ou électromagnétique, commandé par un circuit électronique adéquat.

Ce mouvement d'oscillation, appelé encore activation, entraîne des accélérations sur les différentes parties du bloc optique. Ces accélérations sont d'autant plus importantes que le point considéré est éloigné de l'axe du dispositif et que la fréquence choisie pour l'activation est élevée.

Le bloc optique lui même est assez peu sensible aux déformations que pourraient entraîner ces accélérations. Il n'en est pas de même de certains éléments périphériques tels que les miroirs mobiles qui servent à ajuster la longueur de cavité. Ces miroirs sont encore appelés miroirs piézoélectriques parce qu'ils sont généralement mus par un ensemble de céramiques piézoélectriques.

Sous l'effet des accélérations alternatives d'activation qui sont bien entendu tangentes aux mouvements de chaque points, ou de toute autre accélération, ces miroirs piézoélectriques peuvent se déformer et notamment tourner autour d'un axe parallèle à l'axe d'activation. Cette rotation, bien que très faible, nuit aux performances des gyrolasers.

Par une conception bien adaptée du miroir piézoélectrique, il peut être possible de diminuer ces rotations parasites, mais il est très difficile de les éliminer complètement.

La présente invention selon la revendication 1 a pour objet de supprimer complètement les rotations parasites des miroirs mobiles dues aux déformations de l'ensemble miroir piézoélectrique sous l'effet des accélérations en les corrigeant par un moyen piézoélectrique, capable de créer une déformation égale et opposée à la déformation initiale, et commandé par une tension électrique issue du système d'activation, tension électrique proportionnelle aux accélérations subies par ledit ensemble miroir mobile.

L'invention sera mieux comprise et d'autres avantages de l'invention apparaîtront à l'aide de la description qui suit, en référence aux figures annexées.

La figure 1, rappelle le principe de réalisation d'un gyrolaser typique.

La figure 2 montre, en vue de dessus, la direction des différentes forces agissant sur le ou les miroirs piézoélectriques et dues aux mouvements d'activation.

La figure 3 montre la déformation et la rotation parasite du miroir piézoélectrique sous l'effet des accélérations de l'activation.

La figure 4 présente un mode de résonnance du gyrolaser susceptible d'entraîner des déformations de l'ensemble piézoélectrique.

La figure 5 montre un premier mode de réalisation de l'invention ou les déformations du miroir piézoélectrique sont supprimées en utilisant d'autres céramiques piézoélectriques commandées par un système électronique.

La figure 6 est une vue en coupe perpendiculaire à l'axe du miroir mobile et qui montre la disposition des céramiques semi-cylindriques.

La figure 7 est également une vue en coupe du même dispositif équipé de céramiques plates.

La figure 8 est une vue en coupe du dispositif équipé de deux paires de céramiques agissant dans deux directions.

La figure 9 montre le schéma de principe de la commande électrique utilisée pour le dispositif de la figure 4.

La figure 10 montre le schéma de principe de la commande électrique utilisée pour le dispositif à deux paires de céramiques.

La figure 11 est une vue en coupe du dispositif où des électrodes supplémentaires placées sur les céramiques permettent de mesurer les déformations de l'ensemble mobile piézoélectrique et de les corriger par asservissement. Cette figure présente également le schéma de commande utilisé.

La figure 12 montre une disposition particulière d'électrodes sur une des céramiques utilisée dans la réalisation de la figure 11.

La figure 13 montre un autre mode de réalisation de l'invention où la correction de déformation et l'asservissement de longueur de cavité sont réalisés avec le même ensemle de céramiques.

Tel qu'il est représenté sur la figure 1, le gyromètre laser est constitué d'un bloc optique 1, monté oscillant autour d'un axe 16, grâce à un système de lames élastiques 8 excitées par des céramiques piézoélectriques 9.

Un parcours optique triangulaire ou carré est creusé dans le bloc et rempli d'un mélange d'hélium et de néon excité par un courant électrique passant entre une ou plusieurs cathodes 4 et une ou plusieurs anodes 5.

Le parcours est fermé par des miroirs 2 et un ou plusieurs miroirs mobiles 10, mus par un ou plusieurs moteurs piézoélectriques 11. Un miroir mobile 10 et un moteur piézoélectrique 11 constituent l'ensemble miroir piézoélectrique dont de nombreuses variantes peuvent exister.

Un système de sortie des informations est placé sur l'un des miroirs 2 et est généralement constitué d'au moins un prisme de mélange 6 et d'un ensemble de cellules photoélectriques 7 capables de détecter le défilement des franges d'interférences et, si nécessaire, l'intensité lumineuse des ondes laser.

La figure 2 représente une partie du bloc optique 1 du gyrolaser et le miroir piézoélectrique. Celui-ci est généralement constitué :

– d'une partie fixe extérieure 12, généralement cylindrique, mais qui pourrait prendre toute autre forme en restant dans le cadre de l'invention.

– d'une partie mobile intérieure 13 maintenue dans la partie fixe par une ou plusieurs membranes fines 14 qui lui permettent de se déplacer suivant son axe de quelques microns. Cette partie mobile porte à son extrémité, située du coté du bloc optique, une partie réfléchissante 15 constituant le miroir proprement dit.

– d'un moteur piézoélectrique pour lequel il existe de très nombreuses solution de réalisation. L'une des solutions couramment adoptée consiste à utiliser un bilame piézoélectrique 11 fixé par un ensemble de pièces métalliques sur la partie extérieure 12 déjà décrite.

L'ensemble de ces pièces présente une inertie qui s'oppose à l'accélération alternative de l'activation. L'axe de l'activation étant en 16, l'accélération alternative est figurée par les flèches 17. Du fait que l'accélération d'activation 17 est en opposition de phase avec le déplacement angulaire 18 de ladite activation, la force d'inertie 19 opposée à l'accélération, sera, elle, en phase avec ledit déplacement. La pièce extérieure 12 n'étant pas infiniment rigide aura tendance à se déformer alternativement et dans le même sens 18 que le déplacement du bloc optique 1.

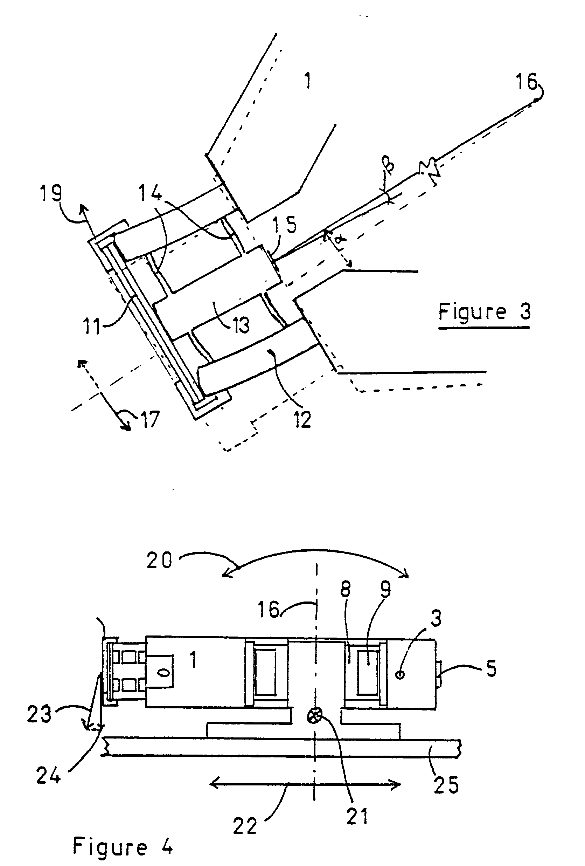

La figure 3 montre, en l'exagérant, la déformation qui se produit et la rotation parasite du miroir.

L'amplitude crête du mouvement d'activation est $\alpha$. Lorsque le bloc optique est déplacé d'un angle $\alpha$ par le mouvement d'activation, l'accélération subie par le bloc et donc par le miroir piézoélectrique est maximum et dirigée suivant la flèche 17. La force d'inertie 19 entraîne les pièces du miroir piézoélectrique dans le sens de la flèche 19.

La pièce extérieure 12 se déforme comme l'indique la figure 3. Les membranes 14 se déforment également comme l'indique la figure et l'ensemble entraîne en rotation la partie centrale 13 qui fera un angle $\beta$ avec sa position initiale.

Cet angle $\beta$, qui varie en synchronisme avec l'activation, peut être très gênant pour les performances du gyrolaser.

Outre l'activation dont les accélérations agissent dans une direction située dans le plan du gyrolaser, celui-ci subit d'autres accélérations qui tendent, elles, aussi à déformer le miroir piézoélectrique.

Tout d'abord, l'ensemble bloc optique 1, mécanisme d'activation 8 et socle 25 n'étant pas infiniment raide, il peut présenter une résonnance sous l'effet des vibrations appliquées au socle du gyrolaser et parallèlement à celui-ci.

La flèche 20 sur la figure 4 présente ce mouvement de résonnance, autour d'un centre de rotation 21 dont la position dépend de la géométrie des pièces, sous l'effet de l'excitation en vibration 22.

Cette résonnance produit, au niveau de l'ensemble piézoélectrique, une accélération alternative 23 dont l'une des composantes 24 tend à déformer le miroir piézoélectrique et à désaligner la cavité optique ainsi que l'homme de l'art le comprendra aisément.

Les autres accélérations que peut subir le gyrolaser et qui peuvent déformer l'ensemble miroir piézoélectrique peuvent provenir des vibrations de l'Unité de Mesure Inertielle (U.M.I.) sur laquelle le gyrolaser est monté ou des accélérations et vibrations imposées de l'extérieur à ladite U.M.I. Ces vibrations et accélérations ayant des directions quelconques pourront avoir des composantes dans les deux directions de déformation de l'ensemble miroir piézoélectrique et entraîneront également des rotations parasites très gênantes pour les performances du gyrolaser.

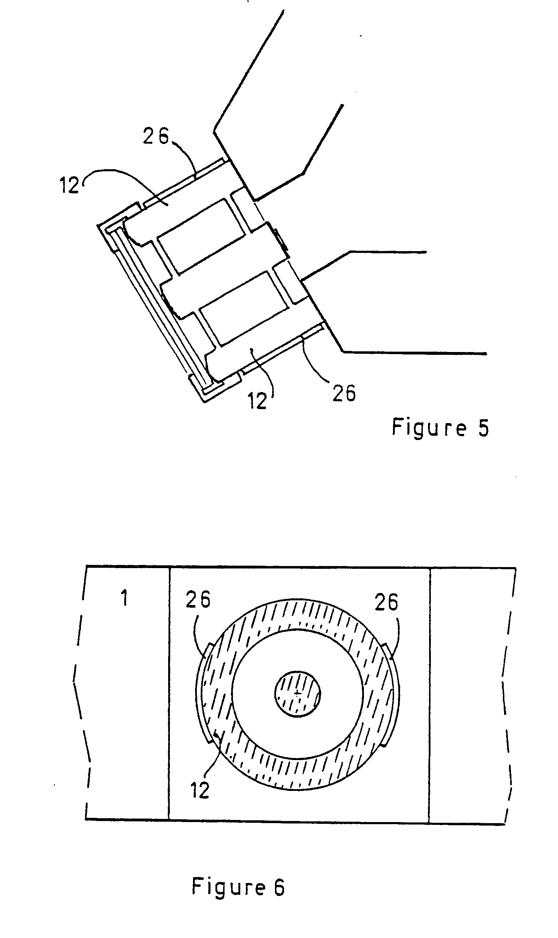

La figure 5 illustre le principe de la présente invention qui tend à supprimer la rotation parasite β.

A cet effet, un moyen piézoélectrique 26 ou électromagnétique introduit une déformation des pièces extérieures 12 égale et opposée à la déformation due aux accélérations. Ledit moyen étant excité par une tension issue d'un circuit électronique.

Comme il a été dit ci-dessus, les principales accélérations entraînant des déformations sont celles dues à l'activation, c'est pourquoi les circuits électroniques auront comme tension d'entrée, une tension issue du système d'activation et représentant la position angulaire dudit système.

D'autres entrées des circuits électroniques pourront recevoir des tensions représentant les accélérations subies par le gyrolaser. Ces accélérations peuvent être mesurées par les accéléromètres de l'U.M.I. sur laquelle le gyrolaser est monté. Elles peuvent aussi être mesurées par des accéléromètres piézoélectriques placés sur le gyrolaser lui-même pour mesurer les vibrations de résonnance.

Les figures 5 et 6 montrent une première réalisation d'un tel dispositif ou des céramiques piézoélectriques 26 sont collées de chaque côté des parties extérieures 12 de l'ensemble miroir piézoélectrique. Ces céramiques sont commandées par des tensions en opposition de phase de telle sorte que l'une se contracte pendant que l'autre se dilate, obligeant la partie extérieure 12 à se redresser. Dans cette réalisation, les céramiques viennent compenser les déformations dans le plan du gyrolaser et donc dans le plan de l'activation.

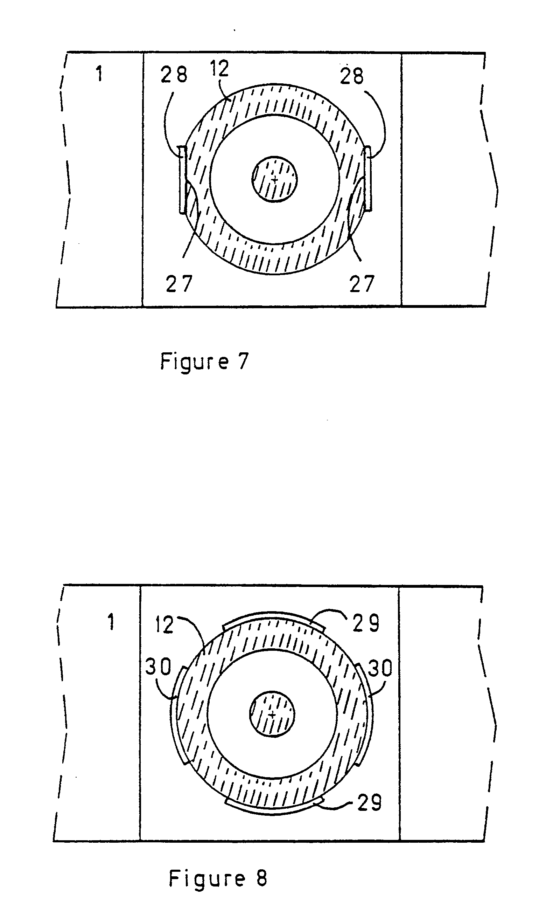

Pour assurer une meilleure liaison entre la partie extérieure 12 et les céramiques 26, celles-ci peuvent être de forme semi-cylindrique, comme le montre la vue en coupe de la figure 6. Ces céramiques peuvent également être planes 28 à condition de réaliser sur la partie extérieure 12 des méplats 27 sur lesquelles elles seront collées, comme le montre la coupe de la figure 7.

La coupe de la figure 8 montre un mode de réalisation de l'invention ou 4 céramiques 29 et 30 disposées par paire dans les deux directions verticales 29 et horizontales 30 permettent de corriger toutes les déformations apportées par les accélérations et vibrations à l'ensemble miroir piézoélectrique.

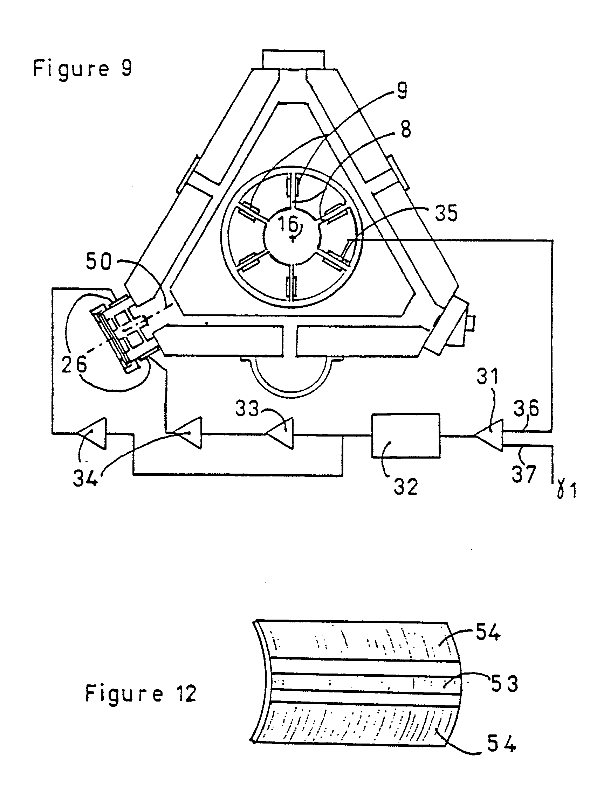

La figure 9 montre le schéma du circuit de commande du dispositif correcteur de la figure 5. Ce circuit, dans un de ses modes de réalisation préférés, comprend :

– Un amplificateur d'adaptation 31,
– Un circuit de réglage de gain et de phase 32,
– Un amplificateur inverseur 33,
– Deux amplificateurs de tension 34 qui commandent les céramiques piézoélectriques.

L'amplificateur d'adaptation comprend au moins deux entrées. L'entrée 36 reçoit un signal issu d'un détecteur de position 35 qui peut être une des céramiques piézoélectriques 9 placées sur l'une des lames 8 du dispositif d'activation ou tout autre moyen piézorésistif, électrostatique ou encore électromagnétique tel que décrit dans le brevet Francais publié sous le n° 2.562.239.

La deuxième entrée 37 peut recevoir un signal γ1 issu de l'électronique de traitement des accélérations mesurées par les accéléromètres placés sur l'U.M.I., de telle sorte que ce signal γ1 représente bien l'accélération subie par le gyrolaser dans la même direction que celle de l'accélération d'activation suba par l'ensemble miroir piézoélectrique, lesquelle est perpendiculaire à l'axe 50 du miroir mobile et située dans le plan du gyrolaser perpendiculaire à son axe de mesure 16.

Dans ces conditions, et après un réglage convenable du gain et de la phase, les forces exercées par les céramiques 26 peuvent être en phase avec l'accélération due au mouvement d'activation et redresser l'ensemble miroir piézoélectrique déformé par les forces d'inertie.

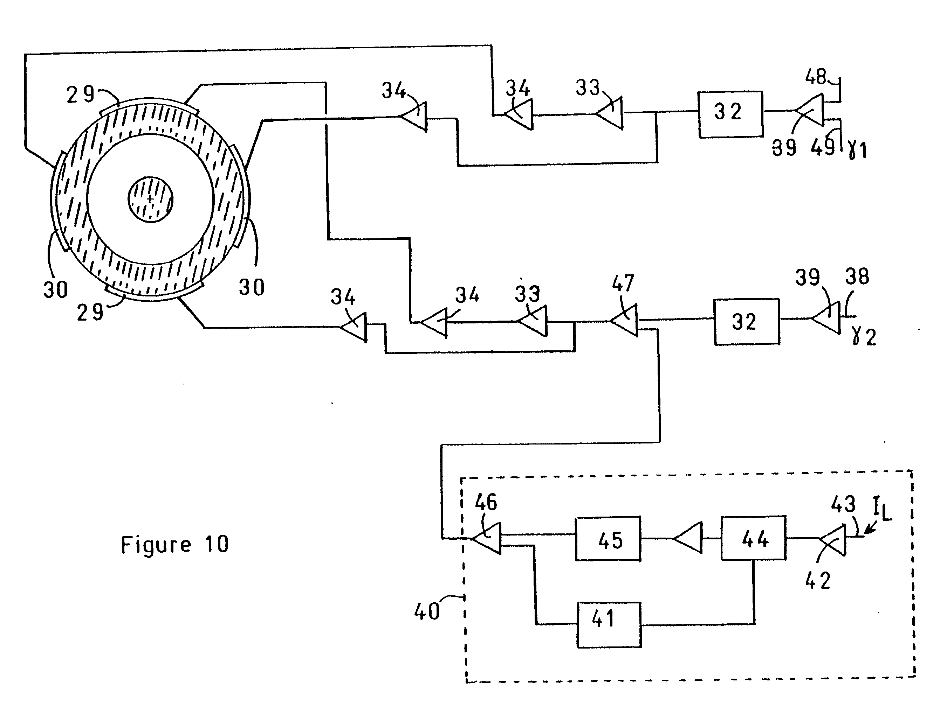

La figure 10 montre le schéma de commande du dispositif à 4 céramiques de la figure 8. Les circuits de commande des céramiques 30, agissant dans le plan horizontal sont identiques à ceux de la figure 9. Ils comportent donc un amplificateur adaptateur 39, un circuit de réglage de gain et de phase 32, un amplificateur déphaseur 33 et deux amplificateurs de tension 34. Les amplificateurs adaptateurs reçoivent sur leurs entrées 48 et 49, la tension issue du détecteur de la position d'activation 35 et la tension γ1 représentative de l'accélération subie par le gyrolaser dans son plan et perpendiculairement à l'axe 50 du miroir mobile. Les circuits de commande des céramiques 29, agissant dans le plan vertical, sont analogues à ceux de la voie horizontale. Ils comportent donc aussi un amplificateur adaptateur 39, un circuit de réglage de gain et de phase 32, un amplificateur déphaseur 33 et deux amplificateur de tension 34. Ils comportent en outre un amplificateur sommateur 47. L'entrée 38 de l'amplificateur adaptateur 39 reçoit une tension représentant l'accélération γ2, issue des circuits de traitement des accélérations, et qui représente l'accélération subie par le gyrolaser dans la direction de son axe de mesure 16.

Un autre ensemble de circuits 40, analogues à ceux qui sont généralement utilisés pour ajuster la longueur de la cavité, permet de faire un asservissement du réglage angulaire de la cavité optique, ainsi que l'homme de l'art le comprendra aisément.

Ce circuit comprend préférentiellement un oscillateur 41, un préamplificateur 42, qui reçoit, sur son entrée 43, l'information d'intensité lumineuse $I_L$ issue par exemple des cellules photoélectriques 7, un démodulateur 44, un réseau correcteur 45 et un amplificateur sommateur 46, dont le signal de sortie est envoyé dans la chaîne de commande des céramiques, sur l'amplificateur sommateur 47.

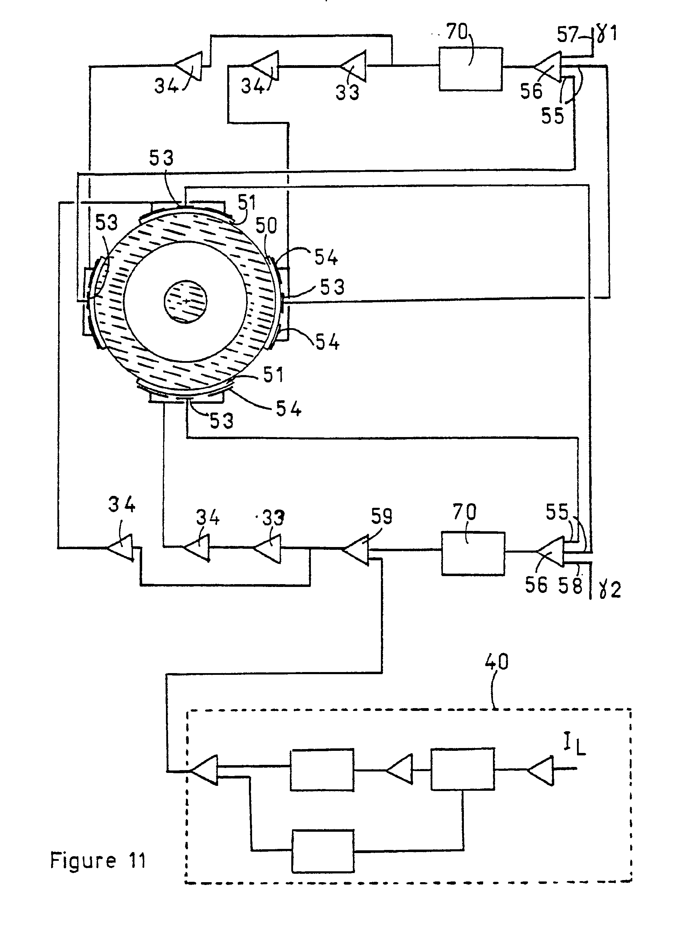

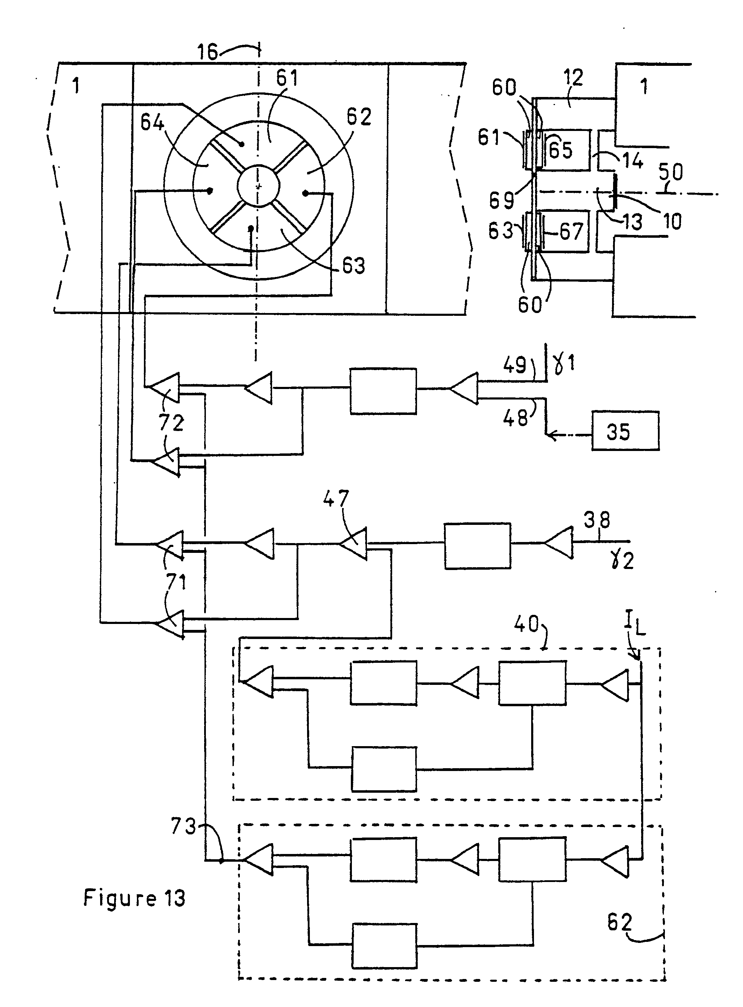

La figure 11 représente un autre mode de réalisation de l'invention, où les 4 céramiques 51 et 52, comportent des métallisations extérieures disposées en bandes parallèles à l'axe 50 du miroir piézoélectrique, ainsi qu'elles sont représentées sur la figure 12. La bande centrale 53 est destinée à mesurer les contraintes subies par les céramiques lorsque l'ensemble miroir piézoélectrique se déforme sous l'effet des accélérations et donc à mesurer la déformation dudit ensemble. Les bandes latérales 54 sont destinées à recevoir les tensions de commande qui, agissait sur les céramiques, viendront corriger les déformations.

Les circuits de commande sont analogues aux précédents et constituent deux boucles d'asservissement. Les signaux issus des bandes centrales sont envoyés sur les entrées 55 différentielles des préamplificateurs adaptateurs 56. Les signaux amplifiés sortent des amplificateurs de tension 34 et sont envoyés aux bandes latérales 54 qui sont branchées en parallèle sur chaque céramique.

A noter toutefois que des réseaux correcteurs particuliers 70 doivent être placés dans le circuits pour assurer la stabilité de ces asservissements.

Ce dispositif n'assure qu'une compensation des accélérations alternatives de vibrations. C'est pourquoi les entrées 57 et 58 peuvent recevoir les signaux d'accélération $\gamma1$ et $\gamma2$ tels qu'ils ont été définis précédemment pour compenser les déformations dues aux accélérations continues.

Un dispositif d'asservissement de l'alignement angulaire de la cavité 40, analogue à celui de la figure 10 déjà décrit, peut également être utilisé dans cette réalisation en faisant rentrer son signal utile sur l'amplificateur sommateur 59.

La disposition, la polarisation, la forme et le nombre des électrodes pourront bien entendu être modifiés sans sortir du cadre de l'invention.

On pourra utiliser, sans sortir du cadre de l'invention, de nombreuses autres dispositions de céramiques piézoélectriques pour corriger les déformations des ensembles miroirs piézoélectriques.

On pourra notamment utiliser les céramiques du moteur piézoélectrique lui-même pour créer à la fois le mouvement de translation de l'asservissement de longueur de cavité et le mouvement de rotation $\beta'$ du miroir égal et opposé à la rotation parasite $\beta$ entraînée par les accélérations.

La figure 13 présente un mode de réalisation correspondant à cette méthode. Le moteur piézoélectrique qui crée le mouvement de translation est réalisé à l'aide par exemple de céramiques circulaires collées de chaque côté d'une membrane 69 externe. La face de chaque céramique, collée à la membrane 69 comporte une métallisation unique. l'autre face comporte une métallisation en 4 secteurs, 61 à 64 pour la céramique extérieure, 65 à 68 pour la céramique intérieure. Les polarisations des deux céramiques sont réalisées en sens opposés et les métallisations des faces collées sont réunies au point froid des alimentations.

Si, par conséquent, on commande les huit secteurs par la même tension, issue des quatre amplificateurs 71 et 72, l'une des céramiques va se dilater et l'autre va se contracter, et ceci sur toute leur surface. L'effet bilame qui s'en suit déplacera le miroir mobile 10 le long de son axe 50 et permettra de réaliser l'asservissement de longueur de cavité.

Si l'on relie entre elles les métallisations 61 et 67, 63 et 65, si on leur applique par l'intermédiaire des amplificateurs 71 deux tensions de signes opposés et si la membrane 69 est suffisamment mince, les parties des céramiques placées sous les métallisations 61 et 67 vont, par exemple, se dilater et celles, placées sous les métallisations 63 et 65, vont se contracter, obligeant la partie centrale 13 à tourner légèrement, ce qui permettra de compenser les déformations de la partie extérieure 12 qui se seront produites sous l'effet des accélérations parallèles à l'axe de mesure 16 du gyrolaser.

Il en sera de même avec les céramiques 62 et 68, 64 et 66, pour redresser les déformations de la partie extérieure 12 dans le plan du gyrolaser perpendiculaire à son axe de mesure.

Pour la clarté du dessin, le branchement des métallisations 65 à 68 n'a pas été représenté et seules les métallisations 61, 63, 65 et 67 ont été représentées sur la vue en coupe du miroir mobile de la figure 13.

Ainsi, en combinant, comme le montre le schéma de la figure 13, les différentes tensions, on peut réaliser à la fois les fonctions d'asservissement de la longueur de cavité, les fonctions d'asservissement du calage angulaire de la cavité optique et la correction des rotations parasites du miroir mobile piézoélectrique sous l'effet des diverses accélérations, de la même façon qu'avec le dispositif présenté dans les figures 8 et 10.

L'asservissement de longueur de cavité 69 est réalisé de préférence selon un schéma bien connu de l'homme de l'art. Son signal de sortie 73 commande les huit métallisations par l'intermédiaire des 4 amplificateurs de tension 71 et 72. La voie de correction horizontale, identique à celle de la figure 10, reçoit sur ses entrées 49 et 48 les signaux d'accélération $\gamma1$ et les signaux de position de l'activation issus du détecteur 35.

La voie de correction verticale, également idenntique à celle de la figure 10, reçoit, sur son entrée 38, le signal d'accélération γ2 et, sur l'amplificateur sommateur 47 le signal issu du circuit d'asservissement de l'alignement angulaire de la cavité 40.

Les deux circuits d'asservissement de longueur de cavité 62 et d'asservissement du réglage angulaire de la cavité 40 reçoivent sur leurs entrées, une tension représentant l'intensité lumineuse $I_L$, mesurée par exemple par les cellules photoélectriques 7.

On pourra bien entendu utiliser toute autre configuration des céramiques du moteur piézoélecrrique de l'ensemble miroir piézoélectrique pour remplir simultanément les deux fonctions d'asservissement de longueur de cavité et de correction des rotations parasites sans sortir du cadre de l'invention.

## Revendications

1. Dispositif d'élimination des rotations parasites du ou des miroirs mobiles d'un gyrolaser du type comprenant :
    – un bloc optique (1) monté rotatif sur un support (25) et muni d'au moins un périmètre optique en boucle fermée, à l'intérieur duquel sont engendrées deux ondes laser inverses,
    – des moyens (6) et (7) permettant d'effectuer un mélange de ces deux ondes en vue d'obtenir un système de franges d'interférences sur des cellules photoélectriques,
    – des moyens d'activation mécanique (8) et (9) permettant de faire osciller le bloc optique (1) par rapport à son support (25),
    – au moins un miroir mobile (10) muni de couches réfléchissantes et mû par exemple par un moteur piézoélectrique (11),
    caractérisé en ce que les rotations parasites du miroir mobile (10), dues aux déformations de l'ensemble miroir piézoélectrique sous l'effet des accélérations sont corrigés par un moyen piézoélectrique (26), créant une déformation égale et opposée à la déformation initiale, commandé par une tension électrique issue du système d'activation, tension électrique proportionnelle aux accélérations subies par ledit ensemble miroir mobile.

2. Dispositif, selon la revendication 1, caractérisé en ce que les céramiques (26) de forme préférentiellement semi-circulaire sont collées à l'extérieur de la partie externe (12) de l'ensemble miroir piézoélectrique.

3. Dispositif, selon la revendication 1, caractérisé en ce que les céramiques (28) de forme plate sont collées sur des méplats (27) réalisés sur la partie extérieure (12) de l'ensemble miroir piézoélectrique.

4. Dispositif, selon l'une des revendications 1 ou 2, caractérisé en ce qu'il comporte deux paires de céramiques (29) et (30) collées sur le pourtour de la pièce extérieure (12) de l'ensemble miroir piézoélectrique, agissant chacune dans une direction pour corriger toutes les déformations dudit ensemble.

5. Dispositif, selon l'une des revendications 1, 2 ou 3 caractérisé en ce qu'il comporte des circuits électroniques pour commander les céramiques, circuits composés de :
    – Un préamplificateur adaptateur (31) qui reçoit une tension issue d'un détecteur (35) de position de l'activation, préférentiellement piézoélectrique et une tension issue des circuits de traitement des informations d'accélération et qui représente l'accélération subie par le gyrolaser dans la direction parallèle aux accélérations que produit l'activation sur le miroir piézoélectrique.
    – Un circuit de réglage de gain et de phase (32),
    – Un amplificateur inverseur (33),
    – Deux amplificateurs de tension (34) qui commandent les céramiques piézoélectriques de correction des déformations.

6. Dispositif, selon l'une des revendications 1 ou 4, caractérisé en ce qu'il comporte deux ensembles de circuits électroniques. le premier comporte un amplificateur adaptateur (39), un circuit de réglage de gain et de phase (32), un amplificateur déphaseur (33) et deux amplificateurs de tension (34). Il reçoit une tension issue d'un détecteur de position de l'activation, préférentiellement piézoélectrique et une tension issue des circuits de traitement des informations d'accélération et qui représente l'accélération subie par le gyrolaser dans la direction parallèle aux accélérations que produit l'activation sur le miroir. La tension sortant des amplificateurs de tension commande les céramiques piézoélectriques (30) de correction des déformations dans cette direction. Le second circuit électronique comporte également un amplificateur adaptateur (39), un circuit de réglage de gain et de phase (32), un amplificateur sommateur additionnel (47), un amplificateur déphaseur (33) et deux amplificateurs de tension (34). Il reçoit une tension issue des circuits de traitement des informations d'accélération et qui représente l'accélération subie par le gyrolaser dans la direction parallèle à son axe de mesure ainsi qu'une tension issue d'un circuit d'asservissement du réglage angulaire de la cavité optique composé d'un oscillateur (41), d'un préamplificateur (42), d'un démodulateur (44), d'un réseau correcteur (45) et d'un amplificateur adaptateur (46). Le préamplificateur (42) de ce circuit reçoit l'information d'intensité lumineuse provenant des cellules photoélectriques (7). La tension sortant des amplificateurs de tension (34) commande les céramiques piézoélectriques (29) de correction des déformations dans une direction parallèle à l'axe de mesure du gyrolaser.

7. Dispositif, selon l'une des revendications 1, 2 ou 4 caractérisé en ce que les céramiques de correction comportent des métallisations en bandes, parallèles à l'axe du miroir piézoélectrique, de telle façon que des bandes (53) servent à détecter les contraintes subies par les céramiques du fait des déformations de la pièce extérieure 12 et que les autres bandes (54) reçoivent des tensions issues des amplificateurs de tension (34). Les circuits électroniques associés comportent des préamplificateurs adaptateurs (56) dont les entrées différentielles reçoivent les signaux issus des bandes détectrices (53), et reçoivent également, suivant les axes, des informations de correction provenant soit des accélérations, soit d'un asservissement de réglage angulaire de la cavité. Ils comportent également des réseaux correcteurs (55) pour la stabilité de l'asservissement, des amplificateurs déphaseurs, et des amplificateurs de tensions (34).

8. Dispositif, selon les revendications 9 et 11, caractérisé en ce que les céramiques (60) du moteur piézoélectrique du miroir mobile commandent à la fois le déplacement nécessaire à l'asservissement de longueur de cavité et la correction de rotation qui compense la déformation de l'ensemble miroir piézoélectrique sous l'effet des accélérations.

9. Dispositif selon la revendication 8 caractérisé en ce que le moteur piézoélectrique est constitué par des céramiques (60), en forme de disque, collées de chaque côté de la membrane extérieure (69), et dont l'une des métallisations est divisée en quatre secteurs qui reçoivent une combinaison des tensions de l'asservissement de longueur de cavité, de l'asservissement du réglage angulaire de la cavité, des accélérations subies par le gyrolaser et de la position angulaire de l'activation.

10. Dispositif, selon l'une quelconque des revendications précédentes, caractérisé en ce qu'il s'applique à tout lasermuni de miroirs mobiles et soumis à des vibrations de résonnance et notamment à tout gyrolaser.

# Claims

1. Device for eliminating the parasitic rotations of the mobile mirror or mirrors of a gyrolaser of the type comprising :
   – an optical block (1) mounted for rotation on a support (25) and having at least one optical perimeter in the form of a closed loop, inside which two reverse laser waves are generated,
   – means (6) and (7) for mixing these two waves so as to obtain a system of interference fringes on photoelectric, cells,
   – mechanical activation means (8) and (9) for causing the optical block (1) to oscillate with respect to its support (25),
   – at least one mobile mirror (10) having reflecting layers and driven for example by a piezoelectric motor (11), characterized in that the parasitic rotations of the mobile mirror (10), due to the deformations of the piezoelectric mirror assembly under the effect of the accelerations, are corrected by a piezoelectric means (26), creating a deformation equal to and opposite the initial deformation, controlled by an electric voltage coming from the activation system, which electric voltage is proportional to the accelerations undergone by said mobile mirror assembly.

2. Device according to claim 1, characterized in that the ceramics (26) preferably of semi-circular shape are bonded to the outside of the external part (12) of the piezoelectric mirror assembly.

3. Device according to claim 1, characterized in that the flat ceramics (28) are bonded to flat surfaces (27) formed on the external part (12) of the piezoelectric mirror assembly.

4. Device according to one of claims 1 or 2, characterized in that it comprises two pairs of ceramics (29) and (30) bonded to the periphery of the external part (12) of the piezoelectric mirror assembly, each acting in a direction for correcting all the deformations of said assembly.

5. Device according to one of claims 1, 2 or 3, characterized in that it comprises electric circuits for controlling the ceramics, which circuits are formed of:
   – an adapter pre-amplifier (31) which receives a voltage from an activation position detector (35), preferably piezoelectric and a voltage from the acceleration information processing circuits and which represents the acceleration undergone by the gyrolaser in the direction parallel to the accelerations which the activation produces on the piezoelectric mirror,
   – a gain and phase adjustment circuit (32),
   – an inverter amplifier (33),
   – two voltage amplifiers (34) which control the piezoelectric deformation correction ceramics.

6. Device according to one of claims 1 or 4, characterized in that it comprises two sets of electronic circuits, the first comprises an adapter amplifier (39), a gain and phase adjustment circuit (32), a phase-shift amplifier (33) and two voltage amplifiers (34), the device receives a voltage from an activation position detector, preferably piezoelectric and a voltage from the acceleration information processing circuits and which represents the acceleration undergone by the gyrolaser in the direction parallel to the accelerations which the activation on the mirror produces. The voltage leaving the voltage amplifiers controls the piezoelectric ceramics (30) for correcting the deformations in this direction. The second electronic circuit also comprises an adapter amplifier (39), a gain and phase adjustment circuit (32), an additional summator amplifier (47), a phase-shift amplifier (33) and two voltage amplifiers (34). It receives a voltage from the acceleration information processing circuits which represents the acceleration undergone by the gyrolaser in the direction parallel to its measurement axis as well as a voltage from a servo-control circuit controlling the angular adjustment of the optical cavity formed of an oscillator (41) a preamplifier (42), a demodulator (44), a corrector network (45) and an adapter amplifier (46). The pre-amplifier (42) of this circuit receives the light intensity information coming from the photoelectric cells (7). The voltage from the voltage amplifiers (34) controls the piezoelectric ceramics (29) correcting the deformations in a direction parallel to the axis of measurement of the gyrolaser.

7. Device according to one of claims 1, 2 or 4, characterized in that the correction ceramics comprise strip metallizations parallel to the axis of the piezoelectric mirror so that some strips (53) serve for detecting the stresses undergone by the ceramics because of the deformations of the external part (12) and the other strips (54) receive voltages from the voltage amplifiers (34). The associated electronic circuits comprise adapter pre-amplifiers (56) whose differential inputs receive the signals from the detecting strips (53) and also receive, along the axes, correction information coming either from the accelerations, or from a servo-control of the angular adjustment of the cavity. They also comprise corrector networks (55) for the stability of the servo-control, phase-shift amplifiers and voltage amplifiers (34).

8. Device according to claims 9 and 11, characterized in that the ceramics (60) of the electric voltage motor of the mobile mirror control both the movement necessary for cavity length servo-control and rotation correction which compensates for the deformation of the piezoelectric mirror assembly under the effect of the accelerations.

9. Device according to claim 8, characterized in that the piezoelectric motor is formed by ceramics (60), in the form of discs, bonded on each side of the external membrane (69), and one of the metallizations of which is divided into four sectors which receive a combination of the voltages for the cavity length servo-control, cavity angular adjustment servo-control, accelerations undergone by the gyrolaser and the angular position of the activation.

10. Device according to one of the preceding claims, characterized in that it applies to any laser with mobile mirrors subjected to resonance vibrations and particularly to any gyrolaser.

**Ansprüche**

1. Vorrichtung zur Ausschaltung von parasitären Drehungen eines oder mehrerer beweglicher Spiegel eines Laserkreiselgerätes, mit :
 – einer optischen Einheit (1), welche drehbar auf eine Trägervorrichtung (25) montiert ist und mit mindestens einem prozessgeschlossenenen optischen Perimeter versehen ist, in welcher zwei entgegengesetzte Laserwellen erzeugt werden,
 – Mitteln (6) und (7) zur Mischung dieser beiden Wellen, um auf Photozellen ein Interferenzstreifensystem zu erhalten,
 – mechanischen Aktivierungsmitteln (8) und (9), um die optische Einheit (1) im Verhältnis zu ihrem Träger (25) in Schwingung zu versetzen,
 – mindestens einem beweglichen, mit reflektierenden Beschichtungen versehenen Spiegel (10), der zum Beispiel durch einen piezoelektrischen Motor (11) bewegt wird, dadurch gekennzeichnet, dass die parasitären Drehungen des beweglichen Spiegels (10), welche durch Verformungen der piezoelektrischen Spiegelstruktur unter der Wirkung von Beschleunigungen verursacht werden, durch eine piezoelektrische Vorrichtung (26) korrigiert werden, welche eine, der ursprünglichen Verformung entsprechende und dieser entgegengesetzte, Verformung verursacht und von einer elektrischen, aus dem Aktivierungssystem stammenden Spannung gesteuert wird, welche Spannung proportional zu den Beschleunigungen ist, denen die besagte bewegliche Spiegelstruktur unterworfen ist.

2. Vorrichtung nach Anspruch 1, dadurch gekennzeichnet, dass die, vorzugsweise halbkreisförmigen Keramikelemente (26) aussen auf die Aussenpartie (12) der beweglichen Spiegelstruktur geklebt sind.

3. Vorrichtung nach Anspruch 1, dadurch gekennzeichnet, dass die flachen Keramikelemente (28) auf Abflachungen (27) geklebt sind, welche auf der Aussenpartie (12) der piezoelektrischen Spiegelstruktur vorgesehen sind.

4. Vorrichtung nach einem der Ansprüche 1 oder 2, dadurch gekennzeichnet, dass sie zwei Keramikelementpaare (29) und (30) aufweist, die auf den Umfang des Aussenteils (12) der piezoelektrischen Spiegelstruktur geklebt sind und jedes Paar in eine Richtung wirkt, um die Verformungen der Struktur zu korrigieren.

5. Vorrichtung nach einem der Ansprüche 1, 2 oder 3, dadurch gekennzeichnet, dass sie elektronische Schaltkreise zur Steuerung der Keramiken aufweist, Schaltkreise, die sich zusammensetzen aus :
 – einem Vorverstärker als Vorsatzglied (31), welcher eine Spannung von einem vorzugsweise piezoelektrischen Aktivierungspositionsdetektor erhält, sowie eine Spannung von den Beschleunigungsinformationsverarbeitungskreisen, welche die Beschleunigung darstellt, der das Kreiselgerät in der Richtung parallel zu den Beschleunigungen, welche die Aktivierung auf den piezoelektrischen Spiegel ausübt, unterworfen ist ;
 – einem Schaltkreis zur Verstärkungs- und Phaseneinstellung (32) ;
 – einem Verstärker-Inversor (33) ;

– zwei Spannungsverstärkers (34), welche piezoelektrische Keramiken zur Korrektur der Verformungen steuern.

6. Vorrichtung nach einem der Ansprüche 1 oder 4, dadurch gekennzeichnet, dass sie zwei elektronische Schaltsysteme aufweist, wobei das erste einen Verstärker als Vorsatzglied (39), einen Verstärkungs- und Phasensteuerkreis (32), einen Paraphasenverstärker (33) und zwei Spannungsverstärker (34) aufweist. Dem System wird eine Spannung vom vorzugsweise piezoelektrischen Aktivierungspositionsdetektor zugeführt, sowie eine Spannung von den Beschleunigungsinformationsverarbeitungsschaltungen, welche die Beschleunigung darstellt, welcher das Laserkreiselgerät in der Richtung parallel zu den von der Aktivierung auf den Spiegel ausgeübten Beschleunigungen unterworfen ist. Die aus den Spannungsverstärkern stammende Spannung steuert die piezoelektrischen Keramiken (30), zur Korrektur der Verformungen in dieser Richtung. Das zweite elektronische Schaltsystem weist ebenfalls einen Verstärker als Vorsatzglied (39), eine Verstärker- und Phasensteuerschaltung (32), einen zusätzlichen Verstärker und Summator (47), einen Paraphasenverstärker (33) und zwei Spannungsverstärker (34) auf. Es erhält eine Spannung aus den Beschleuningsinformationsverarbeitungsschaltungen, welche die Beschleunigung darstellt, welcher das Laserkreiselgerät in der Richtung parallel zu seiner Messachse unterworfen ist, sowie eine Spannung aus einer Schaltung zur Steuerung der Winkeleinstellung des optischen Hohlraums, der sich zusammensetzt aus : einem Oszillator (41), einem Vorverstärker (42), einem Demodulator (44), einen Korrektor (45) und einem Verstärker als Vorsatzglied (46). Der Vorverstärker (42) dieser Schaltung erhält die Leuchtkraftinformation aus Photozellen (7). Die Spannung aus den Spannungsverstärkern (34) steuert die piezoelektrischen Keramiken (29) zur Korrektur der Verformungen in einer Richtung parallel zur Messachse des Laserkreiselgerätes.

7. Vorrichtung nach einem der Ansprüche 1, 2 oder 4, dadurch gekennzeichnet, dass die Korrekturkeramiken streifenförmige Metallbedampfungen aufweisen, parallel zur Achse des piezoelektrischen Spiegels, sodass die Streifen (53) dazu dienen, die Belastungen zu erfassen, denen die Keramiken infolge der Verformungen des äusseren Teils (12) unterworfen sind und den anderen Streifen (54) Spannungen aus dem Spannungsverstärker (34) zugeführt werden. Die zugeordneten elektronischen Schaltungen weisen Vorverstärker als Vorsatzglieder (56) auf, deren Differentialeingängen die Signale der Detektionsstreifen (53) zugeführt werden und erhalten ebenfalls, je nach den Achsen, Korrekturinformationen, entweder aus den Beschleunigungsmitteln oder einem Steuermittel für den Hohlraumwinkel. Sie weisen ebenfalls Korrektoren (55) auf, um die Steuerung zu stabilisieren, sowie einen Paraphasenverstärker und einen Spannungsverstärker (34).

8. Vorrichtung nach den Ansprüchen 9 und 11, dadurch gekennzeichnet, dass die Keramiken (60) des piezoelektrischen Motors des beweglichen Spiegels gleichzeitig die Verschiebung steuern, welche zur Regelung der Länge des Hohlraums notwendig ist und die Korrektur der Drehung, welche die Verformung des piezoelektrischen Spiegelsystems unter der Wirkung der Beschleunigungen kompensiert.

9. Vorrichtung nach Anspruch 8, dadurch gekennzeichnet, dass der piezoelektrische Motor aus scheibenförmigen Keramiken (60) besteht, die zu beiden Seiten der äusseren Membran (69) aufgeklebt sind und eine ihrer Metallbeschichtungen in vier Sektoren aufgeteilt ist, welche eine Kombination der spannungen zur Steuerung der Länge des Hohlraumes, zur Steuerung der Winkeleinstellung des Hohlraumes, der Beschleunigungen, denen das Laserkreiselgerät unterworfen ist und der Winkelposition der Aktivierung erhalten.

10. Vorrichtung nach einem der vorhergehenden Ansprüche, dadurch gekennzeichnet, dass sie für jedes Lasergerät verwendet werden kann, das mit beweglichen Spiegeln ausgerüstet und Resonanzschwingungen unterworfen ist, und insbesondere für alle Laserkreiselgeräte.

EP 0 312 552 B1

Figure 1

Figure 2

10

Figure 3

Figure 4

26

12

Figure 5

1

26

26

12

Figure 6

Figure 7

Figure 8

Figure 9

9

8

35

16

50

26

31

36

33

34

32

37

γ1

Figure 12

54

53

54

Figure 10

EP 0 312 552 B1

Figure 11

Figure 13